## Europäisches Patentamt

## European Patent Office

## Office européen des brevets

(19)

(11) Veröffentlichungsnummer: **0 006 585**
**B1**

(12) **EUROPÄISCHE PATENTSCHRIFT**

(45) Veröffentlichungstag der Patentschrift:
20.10.82

(51) Int. Cl.³: **F 24 J 3/02, E 04 D 3/30**

(21) Anmeldenummer: 79102062.1

(22) Anmeldetag: 22.06.79

(54) Solarabsorber.

(30) Priorität: 26.06.78 DE 2827986

(43) Veröffentlichungstag der Anmeldung:
09.01.80 Patentblatt 80/1

(45) Bekanntmachung des Hinweises auf die Patenterteilung:
20.10.82 Patentblatt 82/42

(84) Benannte Vertragsstaaten:
BE CH DE FR GB LU NL SE

(56) Entgegenhaltungen:
DE-A-2 522 154
DE-A-2 530 152
DE-A-2 621 400
DE-A-2 724 314
DE-U-7 525 656
DE-U-7 709 066
FR-A-2 010 487
GB-A-1 088 988

(73) Patentinhaber: Heuser, Volkmar, Hauptstrasse 71,
D-5429 Miehlen (DE)

(72) Erfinder: Heuser, Volkmar, Hauptstrasse 71,
D-5429 Miehlen (DE)

(74) Vertreter: Blumbach Weser Bergen Kramer Zwirner
Brehm Patentanwälte, Radeckestrasse 43,
D-8000 München 60 (DE)

ACTORUM AG

## Solarabsorber

Solarkollektoren bestehen gewöhnlich aus einer isolierenden Unterlage, einer lichtdurchlässigen Abdeckung und dem dazwischengefügten eigentlichen Kollektorelement, welches von der Sonnenstrahlung aufgeheizt und durch einen Wärmeträger gekühlt wird, so dass die Nutzwärme dem Verbraucher zugeführt werden kann. Als Wärmeträger wird häufig Wasser verwendet, welches an Sonnenscheintagen bis zur Temperatur von Brauchwasser aufgeheizt wird. In Mitteleuropa gibt es aber sehr viele trübe Tage, insbesondere im Herbst und Winter, in denen zudem die Tageslänge verkürzt ist. Gerade zu diesen Zeiten wird aber eine erhöhte Heizhilfe benötigt. Solarkollektoren ohne Isolierung werden allgemein als Solarabsorber bezeichnet.

Es wird von der Erkenntnis ausgegangen, dass es nicht notwendig ist, Spitzenwerte des Wirkungsgrades von Solarkollektoren bei Sonnenschein zu erreichen, dass es vielmehr günstiger wäre, unter Verzicht auf maximalen Wirkungsgrad an trüben Tagen auch der Luft Wärme entziehen zu können (Absorberprinzip). Dies setzt die Verwendung von Wärmepumpen für die Bereitstellung eines passenden Temperaturniveaus voraus. Der Solarabsorber soll also nicht nur an guten Sonnentagen den Wärmeträger ausreichend aufheizen, vielmehr soll an trüben Tagen ein «Speicher» geschaffen werden, dessen Temperatur zwar nicht für Heizzwecke oder Brauchwasser ausreicht, von dem jedoch genügend Wärme abgepumpt werden kann, ohne selbst eine grosse Masse darzustellen, weil ständig Wärme, beispielsweise aus der Luft, nach dem Wärmeaustauscherprinzip nachströmt.

Ein bekannter Solarabsorber (DE-A-2 724 314) besteht aus zwei Blechplatten mit einem Zwischenraum zur Aufnahme des Wärmeträgers. Auf dem Dach nebeneinanderliegende Solarabsorber überdecken einander mit einem dachartigen Randstreifen, sind aber nicht verriegelt. In Dachneigung übereinanderliegende Solarabsorber sind mit steckerartigen Strömungsauslässen miteinander verbunden. Eine quer verlaufende Einlasssammelleitung ragt aus der Dachkonstruktion heraus und ist mit einem trogartigen Teil einschliesslich von steckerartigen Strömungseinlässen verbunden. Eine quer verlaufende Auslasssammelleitung ist ebenfalls mit steckerartigen Gebilden an den Solarabsorber angeschlossen. Nachteilig ist die relative Grösse des Hohlraums für den Wärmeträger wegen des Gewichts von Wasser, ferner die Abweichung vom Aussehen üblicher Dacheindeckungen, mit denen der Solarabsorber nicht verbaut werden kann.

Verriegelungseinrichtungen an Dachplatten sind an sich bekannt (GB-A-1 088 988), jedoch werden ein relativ grosser Überdeckungsgrad oder zusätzliche Befestigungselemente für die Verriegelung benötigt.

Der Erfindung liegt deshalb die Aufgabe zugrunde, einen Solarabsorber zu schaffen, dessen Gewicht nicht wesentlich grösser ist als das einer üblichen Dacheindeckung, dessen Aussehen dem einer üblichen Dacheindeckung gleicht und der mit bestehenden Dacheindeckelementen zusammen verbaut werden kann.

Die gestellte Aufgabe wird durch die Lehre gemäss Anspruch 1 gelöst.

Der Solarabsorber gemäss Erfindung passt sich einer üblichen Form von Hauseindeckungen an, so dass er nicht störend in Erscheinung tritt, wie dies bei üblichen Flachkollektoren mit Glasabdeckungen der Fall ist. Ein weiterer Vorteil liegt darin, dass der Herstellungspreis wesentlich niedriger liegt als der von Flachkollektoren. Als Material des neuen Solarabsorbers kommt rostgeschütztes Blech, Edelstahl, Kupfer, vor allem aber Aluminium in Betracht. Nach aussen ist der Solarabsorber dunkel eingefärbt, es kommen aber auch Grau- oder Brauntöne in Anpassung an architektonische Wünsche in Betracht.

Gemäss einer Ausgestaltung der Erfindung sind die rohrartigen Kanäle und die Querrohre durch je eine ebene Wand begrenzt, die unter Zwischenlage einer Dichtung an den Kreuzungsstellen aufeinanderpressbar sind.

Aluminium lässt sich auf einer Breite extrudieren, welche zwei Wellen der genormten Asbestzement-Wellplatten entsprechen würde, jedoch ist die Herstellung einer einzelnen Welle einfacher, und es können auch Wellplatten mit ungradzahligen Wellenanzahlen zusammengesetzt werden. Nach einer Ausbildung der Erfindung umfasst deshalb jedes streifenförmige Element die Form und Abmessung der Welle einer Wellplatte, weist dabei eine gewisse Überdeckung auf und beginnt bzw. endet ein gewisses Mass nach einem Wellenberg. Die Überdeckungsstellen sind dabei so ausgebildet, dass eine dachziegelartige Überlappung in Richtung auf ein Wellental hin gebildet ist, so dass der Regen gut abgeleitet wird. Das der Überdeckung entsprechende Mass kann im Bereich von $\pi/9$ bis $\pi/4$ der Welle liegen, d.h., jedes streifenförmige Element endet etwa 40 mm jenseits eines Wellenberges, und das benachbarte streifenförmige Element beginnt bereits 20 mm nach dem Wellenberg.

Als Verriegelungseinrichtung ist ein aufnehmender Haken an der Unterseite etwa in einer Entfernung von 20 mm von dem Längsrand und ein Gegenhaken an einem Unterdeckungsstreifen vorgesehen, die ineinandergreifen und benachbarte streifenförmige Elemente miteinander koppeln. Der Unterdeckungsstreifen kann eine Längsnut auf der Oberseite aufweisen, die als Ableitungsrinne für Feuchtigkeit, als Nische zur Aufnahme einer Dichtungsmasse oder eines Dichtungsstreifens oder als Nut zum Eingriff eines Fortsatzes des Überdeckungsstreifens dienen kann.

Es ist vorteilhaft, wenn die Verriegelungselemente mit einer gewissen Vorspannung bei zusammengebauter Wellplatte belastet sind, damit durch Aufeinanderpressen von Flächen eine ausreichende Dichtheit garantiert wird und ausserdem kein klapperndes Geräusch entstehen kann. Zu diesem Zweck ergeben die aneinandergefügten streifenförmigen Elemente eine in Richtung der Wellen gewöbte Platte, die durch die Querrohre eben gezogen wird, wobei die einen Längskanten der streifenförmigen Elemente auf die Oberfläche des Nachbarelementes gepresst werden.

Um die Abmasse einer genormten Asbestzement-Wellplatte zu erzielen, werden sechs streifenförmige Elemente zu einer Wellplatte miteinander vereinigt. Die streifenförmigen Elemente bestehen vorzugsweise aus stranggepresstem Aluminium.

Ein Ausführungsbeispiel der Erfindung wird anhand der Zeichnung beschrieben. Dabei zeigt:

Fig. 1 ein streifenförmiges Element des Solarabsorbers,

Fig. 2 eine vergrösserte Einzelheit beim Zusammenschluss zweier streifenförmiger Elemente,

Fig. 3 eine weitere Einzelheit im Bereich von rohrartigen Kanälen entlang der Linie III–III in Fig. 1 oder 4 und

Fig. 4 einen Schnitt entlang der Linie IV–IV in Fig. 3.

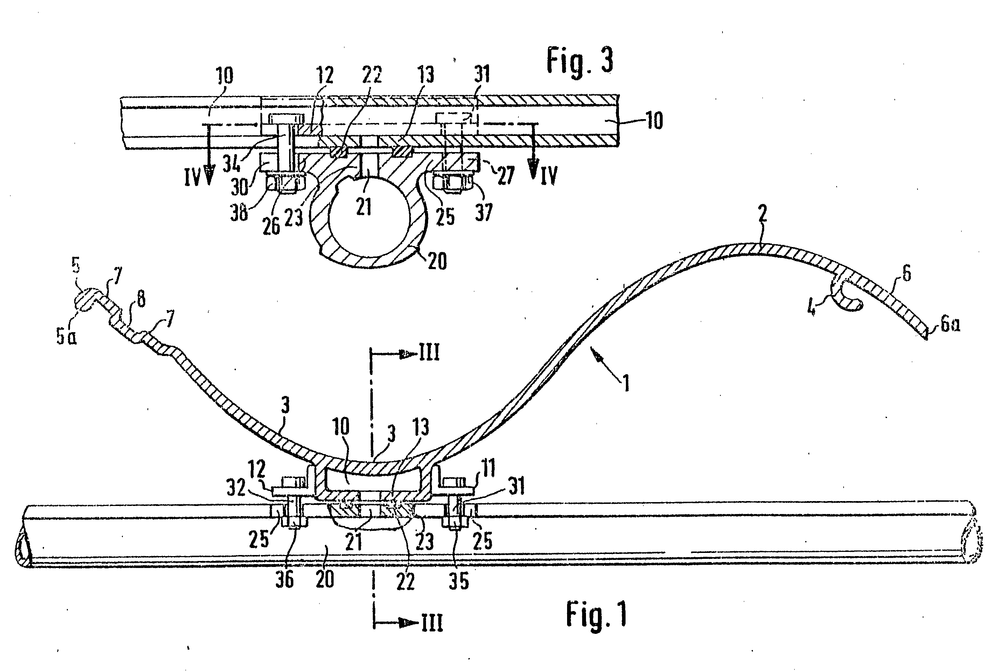

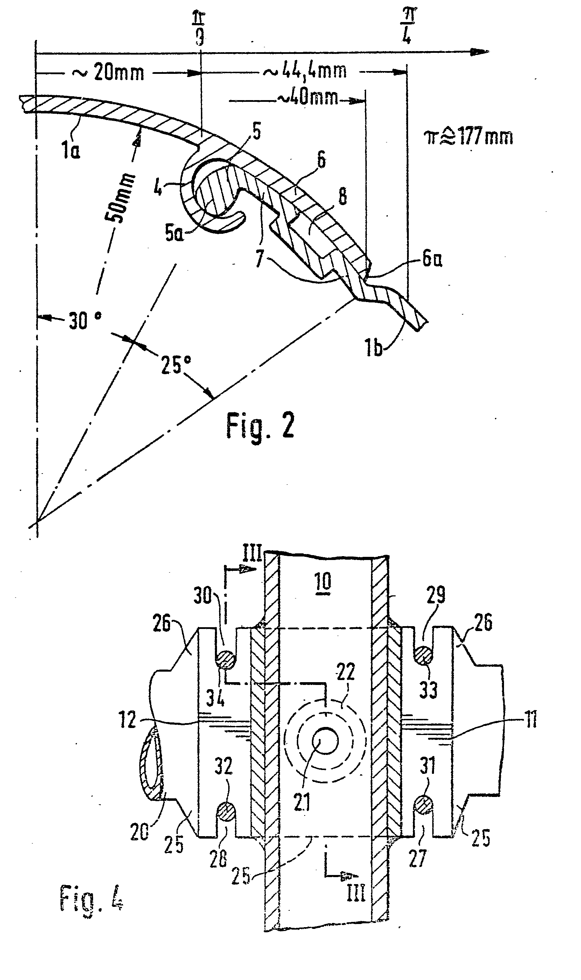

Der Solarabsorber gemäss Erfindung weist die äussere Form und Abmessung von Wellblech oder von Asbestzement-Wellplatten auf, d.h. die Oberseite zeigt Wellenberge und Wellentäler, die in Dachneigung laufen. Um den Solarabsorber aus Aluminium herstellen zu können, wird er in einzelne streifenförmige Elemente 1 unterteilt, wie aus Fig. 1 ersichtlich. Jedes streifenförmige Element 1 umfasst einen im Querschnitt runden Wellenberg 2 und ein im Querschnitt rundes Wellental 3. Die längs laufenden Ränder sind als Verriegelungseinrichtung ausgebildet, und zwar ist ein aufnehmender Haken 4 und ein eingreifender Haken 5 vorgesehen, deren Zusammenwirken aus Fig. 2 ersichtlich ist. Der aufnehmende Haken 4 ist etwa bei 30° (Fig. 2) Zentriwinkel auf der Unterseite des Elementes 1 angeordnet, welches jenseits des Hakens 5 noch einen Überdeckungsstreifen 6 besitzt. Im Bereich des eingreifenden Hakens 5 ist demgemäss ein Unterdeckungsstreifen 7 vorgesehen, längs welchem eine Nut 8 läuft. Der Überdeckungsstreifen 6 bzw. der Unterdeckungsstreifen 7 weist eine Bogenweite von etwa 25° auf. Die längs laufende Nut 8 ist etwa um 45° Bogenmass von dem Wellenscheitel entfernt angeordnet. Entlang der Unterseite des Wellentals 3 läuft ein rohrartiger Kanal 10, der nach unten durch eine ebene Wand 13 begrenzt wird und eine Breite von etwa 24 mm Innenmass auf 5 bis 6 mm Höhe aufweist und dessen Ende z.B. durch eingeschweisste Stopfen verschlossen sind. Nahe dieser Enden sind auf jeder Seite der rohrartigen Kanäle 10 Flansche 11, 12 aufgeschweisst, die der Befestigung eines kreuzenden Querrohres 20 dienen. Das Querrohr 20 weist eine ebene Wand 23 auf, die auf die Wand 13 des Kanals 10 gepresst wird. Im Bereich dieser Kreuzungsstelle ist eine Querbohrung 21 vorgesehen, die sowohl den rohrartigen Kanal 10 als auch das Querrohr 20 durchdringt und so eine Verbindung für den Wärmeträger des Solarabsorbers schafft. Eine Ringdichtung 22 umgibt die Querbohrung 21 und sorgt für einen flüssigkeitsdichten Verschluss nach aussen hin.

Fig. 2 zeigt, wie die Längsränder zweier Elemente 1a, 1b ineinandergreifen. Die Haken 4 und 5 und die sich überlappenden Bereiche 6 und 7 sind so bemessen, dass im fertig zusammengebauten Zustand eine Auflage mit der Randkante 6a bzw. mit dem Hakenrand 5a zustande kommt. Solange die streifenförmigen Elemente 1 lose zusammengefügt sind, liegen sie nicht auf einer Ebene, sondern auf einem Zylindermantel grossen Durchmessers und werden mit der Befestigung an den Querrohren 10 in die gemeinsame Plattenebene gezogen. An der Verriegelungsstelle angrenzender Elemente 1 tritt somit eine gewisse Verspannung ein, wodurch Flattern der Ränder vermieden wird. Die Nut 8, welche in Dachneigung läuft, dient zur Ableitung von Wasser, welches durch den Spalt zwischen den beiden Überdeckungsstreifen 6, 7 nach oben gelangt sein könnte. Es ist auch möglich, in die Nut 8 einen Dichtstreifen einzulegen bzw. eine Dichtmasse einzuspritzen. Schliesslich kann die Nut 8 auch zum Eingriff von Verriegelungsnocken dienen, die an der Unterseite des Überdeckungsstreifens 6 angebracht werden, jedoch nicht dargestellt sind.

Fig. 3 und 4 zeigen eine mögliche Art der Verbindung der Querrohre 20 mit den rohrartigen Kanälen 10. Wie ersichtlich, ist das Querrohr 20 als Strangpressteil ausgebildet und weist Flansche 25, 26 auf, in denen Schlitze 27, 28, 29, 30 zur Aufnahme von Schraubbolzen 31 bis 34 vorgesehen sind. Die Schraubbolzen sind in einem entsprechenden Schlitz des angeschweissten Flansches 11 bzw. 12 seitlich eingeschoben und werden durch Muttern 35 bis 38 gesichert.

Die Wandstärke der einzelnen streifenförmigen Elemente beträgt bei der Verwendung von Aluminium etwa 1,5 mm. Hierzu kommt noch eine äussere Farbschicht aus möglichst dunklem Lack, um die Sonnenstrahlen besser aufzunehmen. Aus architektonischen Gründen können aber auch Grauoder Brauntöne des Decklackes verwendet werden.

Pro Solarabsorber sind zwei Querrohre 20 vorgesehen, und zwar ist das obere Querrohr genau am Ende der rohrartigen Kanäle 10 angebracht und dient zum Abfluss des Wärmemediums, während das untere Querrohr etwa 150 mm vom Ende des Solarabsorbers angebracht ist und dem Zufluss des Wärmemittels dient. Es versteht sich, dass die rohrartigen Kanäle 10 an ihren jeweiligen Enden mit geeigneten eingeklebten oder eingeschweissten Stopfen verschlossen sind und dass die Querrohre über entsprechende Schläuche mit dem Zu- und Ableitungssystem für das Wärmemedium verbunden sind.

Das Querrohr kann im Querschnitt rechteckförmig sein, beispielsweise Abmasse von 30 auf 20 mm aufweisen. Statt der dargestellten Befestigungsart mittels Schrauben, die an Flansche des Querrohres angreifen, ist es auch möglich, die Befestigung über Spannbänder oder -schnallen auszuführen.

Es ist auch möglich, als Material der Dachhaut und der mit dieser integral verbundenen rohrartigen Kanäle einen Kunststoff zu verwenden, wenn die Anzahl der rohrartigen Kanäle pro Flächeneinheit vergrössert wird. Da die Wellungen von Asbestzement-Wellplatten eine Wellenlänge von 177 mm aufweisen, kommt diese äussere Form und Abmessung bei der Verwendung von Kunststoff weniger in Betracht. Es existieren aber äussere Formen und Abmessungen von üblichen Dacheindeckungen, bei denen mit geringeren Abständen der rohrartigen Kanäle gearbeitet werden kann, verglichen mit dem Abstand von 177 mm der Wellplatten. Verglichen mit der Kanalbreite soll jedenfalls der Abstand der Kanäle voneinander relativ gross sein.

**Patentansprüche**

1. Solarabsorber mit folgenden Merkmalen: er besteht aus
   1. einer Dachplatte und
   2. zwei Querrohren (20) als Zufluss und Abfluss eines flüssigen Wärmeträgers;
   die Dachplatte weist
   1.1 einen Hohlraum zur Aufnahme des Wärmeträgers auf
   1.2 und ist an ihren Rändern zur Bildung einer Dachhaut oder Verkleidung mit anderen Dachplatten zusammenfügbar;
   2.1 die Querrohre (20) sind bei den in Dachneigungsrichtung oberen und unteren Enden der Dachplatte an dem jeweiligen Hohlraum angeschlossen;
   gekennzeichnet durch folgende Merkmale:
   1.3 der Solarabsorber ist einer genormten Form von Dacheindeckung nachgebildet;
   1.4 die Dachplatte ist aus einzelnen streifenförmigen Elementen (1) zusammengesetzt,
   1.4.1 die an ihren Längsseiten mit Verriegelungseinrichtungen (4, 5) zum Zusammenbau mit dem jeweiligen Nachbarelement versehen sind
   1.4.2 und gruppenweise mittels der Querrohre (20) mechanisch zusammengehalten und versteift werden
   1.4.3 sowie integriert mit ihrer Unterseite jeweils wenigstens einen durchgehend rohrartigen Kanal (10) als Hohlraum zur Aufnahme des Wärmeträgers aufweisen,
   1.4.4 wobei benachbarte Kanäle (10) einen relativ grossen Abstand voneinander einnehmen;
   2.1.1 die Querrohre (20) überkreuzen die Kanäle (10)
   2.1.2 und weisen an den Kreuzungsstellen jeweils eine Querbohrung (21) auf, die mit dem Inneren des jeweiligen Kanals (10) verbunden ist.

2. Solarabsorber nach Anspruch 1, dadurch gekennzeichnet, dass die rohrartigen Kanäle (10) und die Querrohre (20) durch je eine ebene Wand (13, 23) begrenzt sind, die jeweils unter Zwischenlage einer Dichtung (22) an den Kreuzungsstellen aufeinanderpressbar sind.

3. Solarabsorber nach Anspruch 1 oder 2, dadurch gekennzeichnet, dass die streifenförmigen Elemente (1) jeweils die äussere Form und Abmessung einer Welle von Wellblech oder von Asbestzement-Wellplatten umfasst, dabei eine gewisse Überdeckung aufweist und ein gewisses Mass nach einem Wellenberg (2) beginnt bzw. endet.

4. Solarabsorber nach Anspruch 3, dadurch gekennzeichnet, dass gerechnet von einem Wellenberg (2), der Rand des streifenförmigen Elements (1) etwa im Bereich von π/9 bis π/4 der Welle liegt.

5. Solarabsorber nach einem der Ansprüche 1 bis 4, dadurch gekennzeichnet, dass jede Verriegelungseinrichtung aus einem aufnehmenden Haken (4) an der Unterseite jedes streifenförmigen Elementes (1) in einer Entfernung von dem Längsrand entsprechend einem Überdeckungsstreifen (6) und einem Gegenhaken (5) an einem Unterdeckungsstreifen (7) besteht, wobei der Haken (4) und der Gegenhaken (5) mit gegenseitiger Pressung ineinandergreifen.

6. Solarabsorber nach Anspruch 5, dadurch gekennzeichnet, dass der Unterdeckungsstreifen (7) eine Längsnut (8) an der Oberseite aufweist.

7. Solarabsorber nach einem der Ansprüche 1 bis 6, dadurch gekennzeichnet, dass die aus zusammengefügten Elementen (1) bestehenden Platten eine Wölbungsspannung quer zur Dachneigungsrichtung aufweisen und durch die Querrohre (20) eben gezogen sind, wobei die Verriegelungseinrichtungen (4, 5) an den Längsseiten der Elemente (1) fest aufeinandergepresst werden.

8. Solarabsorber nach einem der Ansprüche 1 bis 7, dadurch gekennzeichnet, dass sechs streifenförmige Elemente (1) als Gruppe zu einer Platte miteinander vereinigt sind, welche die Abmasse der üblichen, genormten Welleneindeckungen aufweist.

9. Solarabsorber nach einem der Ansprüche 1 bis 8, dadurch gekennzeichnet, dass die streifenförmigen Elemente (1) aus stranggepresstem Aluminium mit einer Farbdeckschicht bestehen.

**Claims**

1. A solar absorber having the following features: It consists of:
   1. A roof panel and
   2. Two transverse tubes (20) as the inflow and outflow for a liquid heat carrier;
   the roof panel has
   1.1 A cavity to receive the heat carrier
   1.2 and is adapted to be connected at its edges to other roof panels in order to form a roof skin or panelling;
   2.1 The transverse tubes (20) are connected to the relevant cavity at the top and bottom ends of the roof panel as considered in the direction of roof inclination;
   characterised by the following features:
   1.3 The solar absorber is modelled on a standard form of roof covering;

1.4 The roof panel is composed of individual strip-shaped elements (1),

1.4.1 which at their longitudinal sides are provided with locking means (4, 5) for assembly to the associated neighbouring element

1.4.2 and are mechanically retained and stiffened in groups by means of the transverse tubes (20)

1.4.3 and have, as a cavity to receive the heat carrier, in each case at least one continuous tube-like channel (10) integrated with their underside

1.4.4 Adjacent channels (10) occupying a relatively considerable distance from one another;

2.1.1 The transverse tubes (20) cross over the channels (10)

2.1.2 and have in each case at the points of intersection a transverse bore (21) connected to the interior of the associated channel (10).

2. A solar absorber according to claim 1, characterised in that the tube-like channels (10) and the transverse tubes (20) are each defined by a flat wall (13, 23) adapted to be pressed one upon the other at the points of intersection in each case with the interposition of a seal (22).

3. A solar absorber according to claim 1 or 2, characterised in that the strip-shaped elements (1) each embrace the external shape and dimensions of a corrugation of corrugated sheet or asbestoscement corrugated panels, have a certain overlap, and start and end respectively a certain distance after a corrugation crest (2).

4. A solar absorber according to claim 3, characterised in that counting from the crest (2) of a corrugation the edge of the strip-shaped element (1) is approximately in the range from π/9 to π/4 of the corrugation.

5. A solar absorber according to any one of claims 1 to 4, characterised in that each locking device consists of a receiving hook (4) at the underside of each stripshaped element (1) at a distance from the longitudinal edge corresponding to an overlap strip (6), and a co-acting hook (5) on a strip (7) engaging therebeneath, the hook (4) and the co-acting hook (5) engaging one inside the other with mutual pressure.

6. A solar absorber according to claim 5, characterised in that the under-engaging strip (7) has a longitudinal groove (8) at the top.

7. A solar absorber according to any one of claims 1 to 6, characterised in that the panels consisting of assembled elements (1) have a curvature tension transversely of the direction of the roof inclination and are drawn flat by the transverse tubes (20), the locking devices (4, 5) being pressed tightly on one another at the longitudinal sides of the elements (1).

8. A solar absorber according to any one of claims 1 to 7, characterised in that six strip-shaped elements (1) are combined as a group to form a panel having the dimensions of conventional standard corrugated covering.

9. A solar absorber according to any one of claims 1 to 8, characterised in that the strip-shaped elements (1) consist of extruded aluminium having a top coat of paint.

**Revendications**

1. Capteur solaire du genre comprenant:

1. un élément de couverture;

2. deux tubes transversaux (20) constituant arrivée et retour d'un fluide caloporteur;

chaque élément de couverture présentant:

1.1 un espace creux pour la circulation du fluide caloporteur;

1.2 et une possibilité d'assemblage par ses bords à d'autres éléments de couverture pour la formation d'une toiture ou d'un habillage;

2.1. les tubes transversaux (20) sont reliés à l'espace creux de chaque élément de couverture au niveau des extrémités supérieure et inférieure de celui-ci dans le sens d'inclinaison du toit;

caractérisé en ce que

1.3. le capteur est réalisé sous la forme d'une toiture usuelle;

1.4. la toiture est composée d'éléments de couverture réalisés sous forme de bandes et assemblés entre eux;

1.4.1. Les éléments (1) sont pourvus d'organes de verrouillage (4, 5) pour leur assemblage avec les éléments voisins respectifs;

1.4.2. les éléments (1) sont assemblés par groupe et renforcés mécaniquement par les tubes transversaux (20);

1.4.3. au moins un canal (10) de forme tubulaire est intégré sur toute la longueur de la face inférieure de chaque élément (1) pour constituer une espace creux pour la circulation du fluide caloporteur;

1.4.4. la distance entre deux canaux (10) voisins est relativement importante;

2.1.1. les tubes transversaux (20) croisent les canaux (10);

2.1.2. ils sont pourvus chacun à leur point de rencontre d'un perçage (22) relié à l'intérieur du canal correspondant (10).

2. Capteur solaire suivant la revendication 1, caractérisé en ce que les canaux de forme tubulaire (10) et les tubes transversaux (20) sont délimités chacun par une paroi plane (13, 23), lesdites parois étant appliquées l'une contre l'autre par l'intermédiaire d'un joint (22).

3. Capteur solaire suivant l'une quelconque des revendications 1 et 2, caractérisé en ce que les éléments (1) en forme de bande ont la forme et le poids d'une ondulation de tôle ondulée ou d'une plaque ondulée de fibro-ciment représentant une certaine surface de couverture et terminant ou respectivement commençant la partie bombée (2) des éléments voisins.

4. Capteur solaire suivant la revendication 3, caractérisé en ce que, calculé à partir de la partie bombée (2), le bord de l'élément (1) se situe environ entre $\pi/9$ et $\pi/4$ de l'ondulation.

5. Capteur solaire suivant l'une quelconque des revendications 1 à 4, caractérisé en ce que chaque organe de verrouillage est constitué par un crochet récepteur (4) situé sur la face inférieure de chaque élément (1), à une certaine distance de l'arête longitudinale de la bande du dessus et d'un autre crochet (5) sur la bande du dessous, le crochet (4) et le crochet (5) s'engageant à force l'un dans l'autre.

6. Capteur solaire suivant la revendication 5, caractérisé en ce que la bande couvrante inférieure (7) est pourvue d'une rainure longitudinale (8) sur sa face tournée vers le haut.

7. Capteur solaire suivant l'une quelconque des revendications 1 à 6, caractérisé en ce que la toiture constituée des éléments de couverture (1), assemblés entre eux, qui présente un bombement transversal par rapport au sens d'inclinaison du toit est rendue plane par l'intermédiaire des tubes transversaux (20), tandis que les organes de verrouillage (4, 5) des bords longitudinaux sont fermement maintenus l'un dans l'autre.

8. Capteur solaire suivant l'une quelconque des revendications 1 à 7, caractérisé en ce que six éléments (1) sont réunis en une plaque, laquelle présente les ondulations normales et habituelles d'une toiture.

9. Capteur solaire suivant l'une quelconque des revendications 1 à 8, caractérisé en ce que les éléments en forme de bandes (1) sont réalisés par emboutissage d'une tôle d'aluminium peint.

Fig. 3

Fig. 1

Fig. 2

Fig. 4